# EUROPEAN PATENT APPLICATION

(11) **EP 4 851 487 A1**
(43) Date of publication of application: **09.12.2026**
(21) Application number: 26182573.1
(22) Date of filing: 02.06.2026
(51) Int. Cl.: F16H 1/28, F16H 55/18

(54) **SCISSOR GEAR, TRUCK COMPONENT, TRUCK, AND INSTALLATION METHOD**

(30) Priority: 03.06.2025 NL 2040499
(71) Applicant: DAF Trucks N.V., 5643 TW Eindhoven (NL)
(72) Inventor: KIRUBAGARADASS, Udhaya Kumar, 5643 TW Eindhoven (NL)
(74) Representative: V.O.

(57) **Abstract**

Disclosed herein is a scissor gear with an installation bolt that axially extends through the first gear and the second gear. The installation bolt can be driven to a first axial position and a second axial position. In the first axial position, an alignment section of the shaft abuts a contact surface of the second gear, thereby aligning the second with respect to the first gear. In the second axial position, the alignment section is moved beyond the contact surface and a recessed section of the shaft provides the second gear with a clearance that allows a relative rotation. The bolt head of the installation bolt is tightened against and axial end face of the first gear to fixate the installation bolt in the second axial position.

## Description

The invention relates to a scissor gear. The invention further relates to a truck component comprising such a scissor gear. The invention further relates to a truck comprising such a truck component. The invention further relates to a method for installing a scissor gear into a gear train.

### BACKGROUND

A scissor gear is a type of gear mechanism that can be used to eliminate or reduce backlash - the slight, unwanted movement between meshing gear teeth when torque is reversed due to play between mating gear teeth. Backlash can lead to noise, vibration, and reduced accuracy, especially in high-precision systems.

A scissor gear typically comprises two gears that are mounted together on the same shaft and in contact with the same mating gear. One of these gears is fixed while the other is rotatable and preloaded with a torque about the shaft axis, e.g. by a torsion spring or other elastic means. This preload torque is intended to create an angular displacement of the preloaded gear with respect to the fixed gear, such that in use, the teeth of both the preloaded gear as well as the fixed gear stay tightly engaged with the teeth of a mating gear, e.g. in a drive train. In general, the fixed gear is arranged to transfer normal positive drive torque, while the moveable, preloaded gear is arranged to deal with negative torque in the drive train that occurs in a direction opposite to the positive drive torque.

To install a scissor gear in a drive train, the teeth of the preloaded gear are brought in alignment with the teeth of the fixed gear by for example an installation aid, e.g. a bolt or pin that extends through both gears and prevents a relative rotation. After installation, such an installation aid usually needs to be manually removed, e.g. using a special pulling tool, to re-allow the relative rotation between the two gears and ensure that the scissor gear functions correctly.

A downside of this process is that, during or after removal of the installation aid, the operator may inadvertently lose hold of the installation aid so that it drops into the application or gets lost.

### SUMMARY

The present invention aims to address this problem, by providing an improved scissor gear that is easier to install.

In one aspect, the present invention provides a scissor gear as defines in the appended claims. The scissor gear comprises a first gear and a second gear that are rotatable with respect to each other about a common gear axis. The first gear and the second gear are coupled to each other by a preload arrangement that is configured to apply a preload that causes a relative rotation between the first gear and the second gear about the common gear axis. The scissor gear further comprises an installation bolt comprising a shaft that axially extends through the first gear and the second gear.

The shaft comprises an alignment section that is arranged for aligning the first gear and the second gear with respect to each other in a predefined angular position. The shaft is coupled to the first gear by a threaded connection that allows an operator to axially position the alignment section with respect to the second gear by driving a bolt head of the installation bolt.

In a first axial position, the alignment section abuts a contact surface of the second gear to hold the second gear, e.g. the preloaded gear, with respect to the first gear, e.g. the fixed gear, in the predefined angular position. In a second axial position, the alignment section is moved beyond the contact surface, and a recessed section of the shaft, which is recessed with respect to the alignment section, provides the second gear with a clearance that allows a relative rotation of the second gear with respect to the first gear. In the second axial position, the bolt head of the installation bolt is tightened against an axial end face of the first gear to fixate the installation bolt.

Accordingly, the installation bolt is designed to remain attached to the scissor gear, both during installation as well as during use of the scissor gear in a gear train. This facilitates assembly and servicing. During installation of the scissor gear, the installation bolt extends only partially into the first and second gear, in the first axial position that causes the alignment section to be in contact with the second gear to prevent the relative rotation and align the first and second gear with respect to each other.

Conversely, during use, when the scissor gear is installed in a gear train, the installation bolt can be fully inserted into the first and second gear in the second axial position, such that the alignment section is moved beyond the second gear and the recessed section provides the second gear with a clearance that allows the relative rotation. The clearance is dimensioned such that, in use, the second gear does not contact the shaft of the installation bolt, regardless of the relative rotation between the second gear and the first gear. In other words, the second gear is completely free to rotate with respect to the first gear in the second axial position of the scissor gear, while the installation bolt remains inserted in the scissor gear.

In the second axial position, locking means prevent movement or migration of the installation bolt, e.g. in axial direction and/or in the direction of rotation about the axial centerline of the installation bolt, to ensure that the second gear remains free to rotate relative to the first gear. The locking means comprise an end stop that is provided by an axial end face of the first gear or the second gear, and the bolt head of the installation bolt is tightened against the end stop in the second axial position. By tightening the bolt head of the installation bolt against the axial end face, e.g. with a pre-tension torque, a friction coupling is formed between the bolt head and the axial end face that prevents movement of the installation bolt in any direction with respect to the end face. Alternatively, or additionally, the locking means can for example comprise a snap-fit or interference fit, a circlip, key or other means to prevent axial migration of the installation bolt. For simplicity, the locking means are preferably an integral part of the installation bolt and/or the first or second gear. The locking means at least ensure that the installation bolt remains in the second axial position, to eliminate noise and vibrations that would otherwise be caused by movement of the installation bolt during use of the scissor gear, e.g. in a gear train.

The clearance preferably surrounds the recessed section, so that it allows a relative rotation in both a clockwise and an anti-clockwise direction without the recessed section contacting the second gear when the scissor gear is installed and operating in meshing engagement with a mating gear.

In the second axial position, the installation bolt allows a limited amount of relative rotation between the first gear and the second gear. This limited amount is preferably sufficient to eliminate play between meshing teeth of the scissor gear and a mating gear. However, since the installation bolt remains inserted and extend though both the first and second gear during use, the amount of relative rotation is limited by how much clearance can be provided by the recessed section without losing structural integrity. Preferably, the allowed relative rotation is larger than an expected play between teeth of the first gear and teeth of a mating gear. The expected play is usually in the order of 0,05-0,5 millimeters, or smaller than 0,05 millimeter. The expected play may depend on the diameter (i.e. pitch circle) and module of the scissor gear and mating gear, the type of meshing (e.g. spur gear teeth, or helical gear teeth), pressure angle, lubrication, rotational speed and transferred loads during use, and the materials of the scissor gear and mating gear. The expected play may increase over time due to wear. This can all be taken into account when determining the minimum relative rotation that is to be allowed.

Conversely, the maximum allowed relative rotation in the second axial position is preferably equal to or smaller than 0,5 degrees, more preferably equal to or smaller than 0,2 degrees. This is usually sufficient to compensate for variations in the interdistance between teeth of a mating gear, and thus to eliminate play in the interaction with the teeth of the scissor gear, e.g. during zero-torque crossing conditions of the gear train or changes of direction of rotation.

In preferred embodiments, the second gear comprises a hole through which the shaft of the installation bolt extends, and a sidewall of the hole provides a contact face for contacting the alignment section of the shaft in the first axial position. The alignment section in that case preferably has an axial length that is equal to or smaller than an axial length of the contact face, and the alignment section at least partially overlaps the contact face in the first axial position. In this way it is ensured that the relative rotation is constrained. Conversely, the recessed section preferably has an axial length that is equal to or larger than an axial length of the contact face, and the recessed section completely overlaps the contact face in the second axial position to avoid contact between the contact face and any part of the shaft of the installation bolt.

To reduce the axial length of the installation bolt, and thus reduce the extension or protrusion of the installation bolt shaft beyond the first and second gear in the second axial position, the axial length of the contact face can be made smaller than a maximum axial length of the second gear. This can e.g. be accomplished by forming a recess in the second gear around the hole through which the installation bolt shaft extends. Such a recess extends from an axial end face of the second gear into an interior of the second gear, thereby effectively locally reducing the axial thickness of the second gear around the hole. The result is that the contact face is also reduced in axial length, which provides a more compact solution. Alternatively, regardless of whether or not a recess is present in the second gear, only the axial length of the installation bolt shaft can be shortened.

Preferably, the alignment section has an outer diameter that is larger than an outer diameter of the recessed section, and the alignment section and the recessed section taper into each other, to facilitate the transition between the first axial position and the second axial position.

The threaded connection is in some embodiments formed between a threaded section of the shaft and a threaded hole in the first gear. The threaded section in such embodiments may have an outer diameter that is equal to or larger than an outer diameter of the alignment section, to facilitate assembly and operation of the installation bolt in the first and second gear. In some practical embodiments, the recessed section axially extends between the threaded section and the alignment section, and the threaded section extends from the bolt head.

In other embodiments, the recessed section extends from the bolt head, the threaded section is provided on a distal axial end of the shaft, and the alignment section extends between the recessed section and the threaded section. In that case the second gear preferably comprises a stepped hole through which the shaft of the installation bolt axially extends into a threaded hole in the first gear. The sidewall of the stepped hole may include a narrow part that provides the contact surface for contacting the alignment section of the shaft in the first axial position, and a wide part that provides the clearance in the second axial position. The threaded hole in the first gear may comprise a bottom surface that provides the axial end face for fixating the installation bolt.

Besides constraining and allowing the relative rotation, the installation also ensures rotational alignment between the first and second gear in the first axial position of the scissor gear. In other words, in the first axial position, the alignment section aligns the first gear and the second gear with respect to each other in a predefined angular position, e.g. such that a selected tooth of the first gear is substantially aligned with a corresponding tooth of the second gear. In this state, the scissor gear can be installed in a gear train, in which the scissor gear meshes with a mating gear.

In a second aspect, the present invention provides a truck component, preferably an air compressor or a fuel pump, as defined in the appended claims. These and other truck components in some cases have a gear train of which the output torque crosses the zero-line, e.g. when a negative torque, opposite to a normal positive drive torque, occurs in the gear train. As a result, any backlash or play present in the gear train may cause unwanted movement, e.g. noise or vibrations, during normal operation. To eliminate this backlash or play, the truck component preferably comprises the scissor gear as described herein. The installation bolt facilitates assembly and servicing of the truck component.

In a third aspect, the present invention provides a truck as defined in the appended claims. The truck comprises the truck component, and thus also the scissor gear described herein.

In a fourth aspect, the present invention provides a method as defined in the appended claims, for installing a scissor gear as described herein in a gear train. The method comprises (i) aligning the first gear and the second gear with respect to each other in a predefined angular position by driving the installation bolt to the first axial position; (ii) mounting the scissor gear in the gear train in engagement with a mating gear; (iii) driving the installation bolt to the second axial position, thereby allowing a relative rotation between the first gear and the second gear; and (iv) tightening the bolt head against an axial end face of the first gear to fixate the installation bolt in the second axial position.

### BRIEF DESCRIPTION OF THE DRAWINGS

The invention will be further elucidated in the figures:
FIG. 1 illustrates an embodiment of a truck, comprising a truck component which includes a scissor gear;
FIG. 2 provides a detailed view of an embodiment of the truck component;
FIG. 3A-C illustrate an embodiment of the scissor gear, in particular showing an installation bolt of the scissor gear in isometric view (FIG. 3A), in side view (FIG. 3B), and in exploded view (FIG. 3C);
FIG. 4A-B show section views of an embodiment of the scissor gear, in which the installation bolt is in a first axial position, and in a second axial position, respectively;
FIG. 5 provides a detailed view of an embodiment of the installation bolt;
FIG. 6A-C illustrate an embodiment of the scissor gear in an initial state before assembly into a gear train;
FIG. 7A-C illustrate the scissor gear of FIG. 6A-C in a second state, in which the installation bolt is in a first axial position;
FIG. 8A-C illustrate the scissor gear of FIG. 7A-C in a third state, in which the scissor gear is installed in meshing engagement with a mating gear of the gear train;
FIG. 9A-C illustrate the scissor gear of FIG. 8A-C in a fourth state, in which the installation bolt is in a second axial position;
FIG. 10A-C illustrate yet another or further embodiment of the scissor gear.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

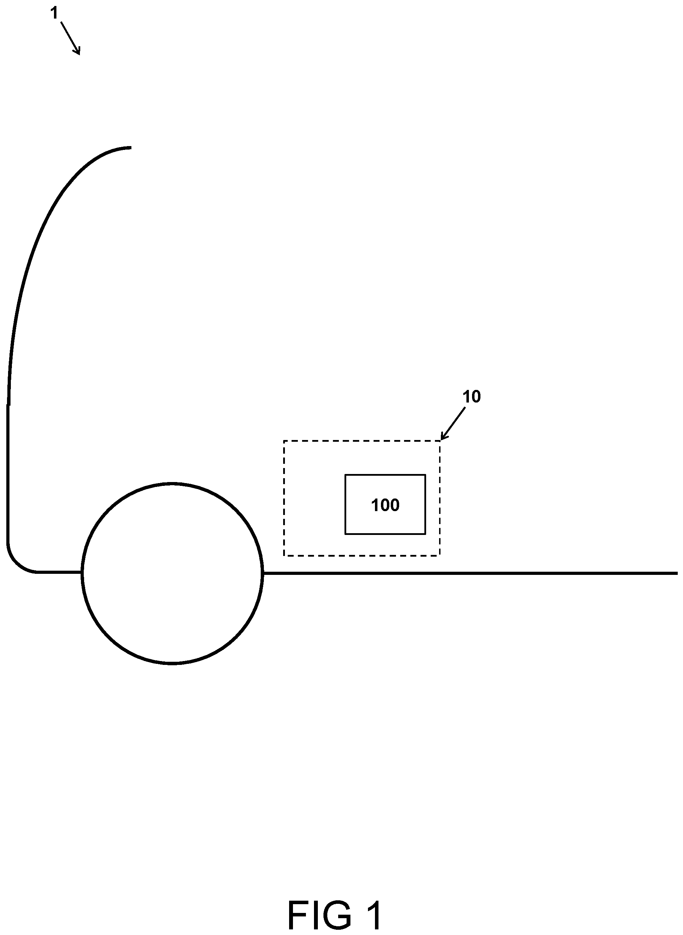

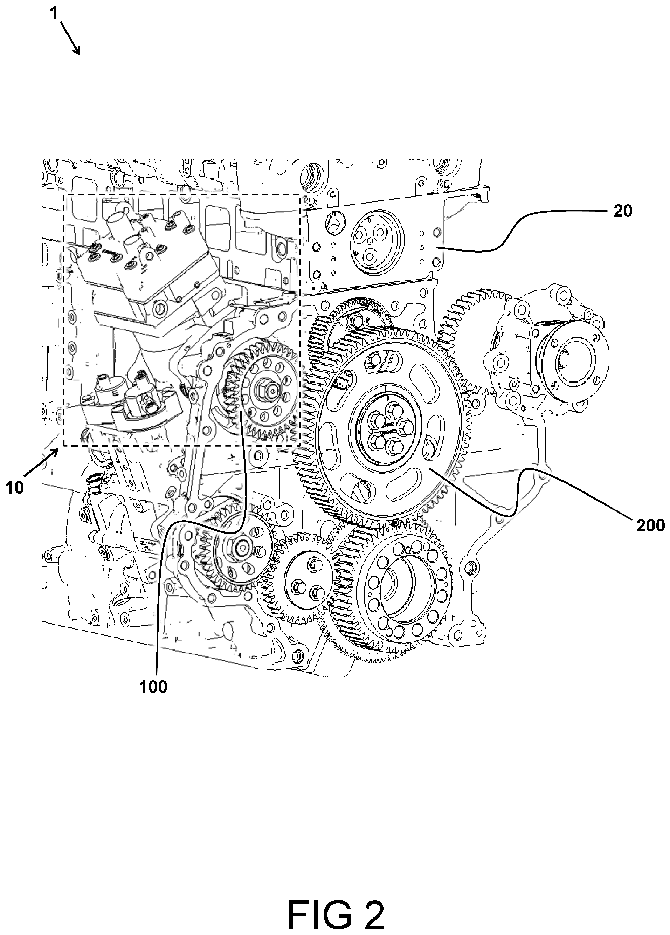

FIG. 1 illustrates an embodiment of a truck 1, e.g. a tractor of a tractor-trailer combination or a box truck. The truck 1 comprising a truck component 10, e.g. an air compressor or a fuel pump. The truck component 10 includes a gear train with at least one scissor gear arranged for eliminating backlash or play with respect to a mating gear. For example, FIG. 2 illustrates an embodiment in which the truck component 10 is an air compressor that is driven by an idler gear 200 of an internal combustion engine 20 of the truck 1. The scissor gear 100 is mounted to the input shaft of the air compressor 10, and meshes with the idler gear 200, which is for example mounted to an output shaft of the internal combustion engine. The engine output shaft thus drives the input shaft of the air compressor. The scissor gear 100 is arranged for eliminating backlash, or play, that would normally be present between the meshing gear teeth of the scissor gear 100 and the idler gear 200.

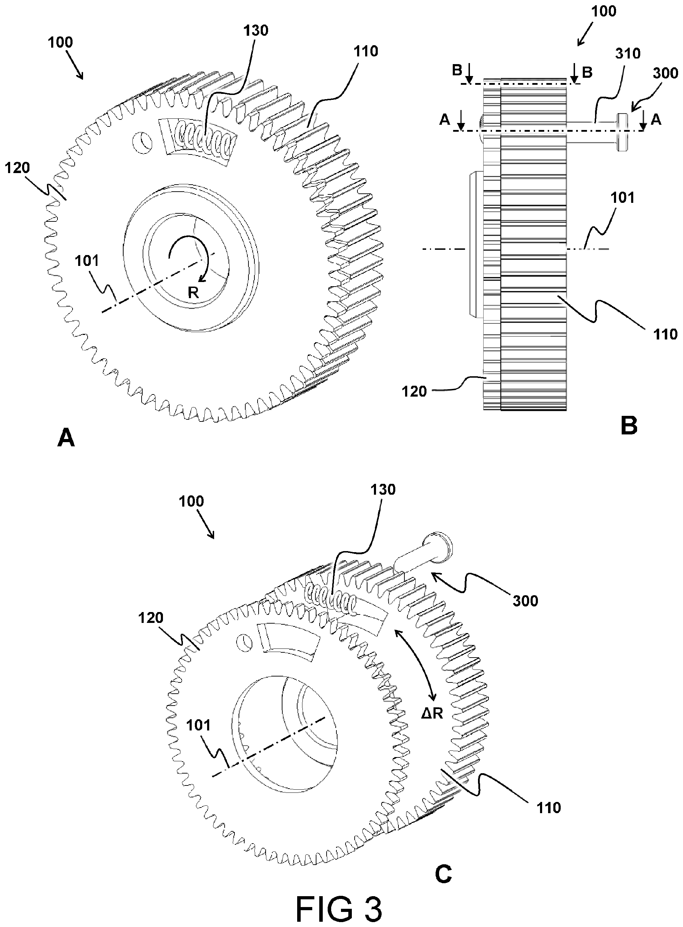

FIG. 3A, 3B and 3C provide different views of an embodiment of the scissor gear 100. FIG. 3A provides an isometric view of the scissor gear assembly. As illustrated in FIG. 3A, the scissor gear 100 comprises a first gear 110 and a second gear 120 that are rotatable with respect to each other about a common gear axis 101, e.g. in rotation direction R. FIG. 3B provides a side view, and FIG. 3C provides an exploded view of the scissor gear, , showing a preload arrangement, e.g. comprising a spring element 130, that couples the first gear 110 and the second gear 120 to each other, and that is configured to apply a preload that causes a relative rotation ΔR between the first gear 110 and the second gear 120 about the common gear axis 101. The scissor gear 100 further comprises an installation bolt 300 which has a shaft 310 that axially extends through the first gear 110 and the second gear 120, e.g. substantially parallel to the common gear axis 101.

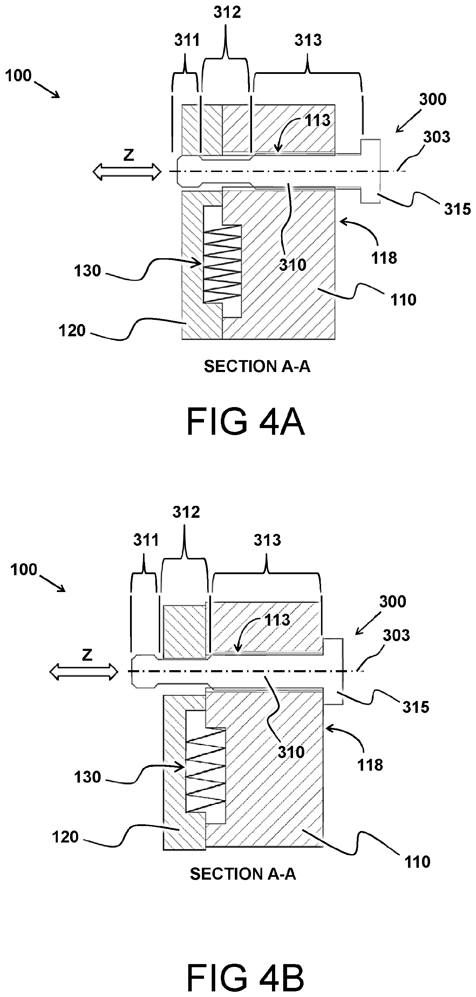

FIG. 4A-B provide a more detailed section view of the scissor gear 100, in particular showing the installation bolt 300 extending through the first and second gears 110, 120, e.g. in direction Z along the axial centerline 303 of the installation bolt. FIG. 4A illustrates the installation bolt 300 in a first axial position, in which the installation bolt 300 is partially inserted into the first and second gears 110, 120. That is, the bolt head 315 of the installation bolt is at a distance from an axial end face 118 of the first gear. In this state, the scissor gear is in an first axial position, as explained further on. FIG. 4B illustrates the installation bolt in a second axial position, in which the installation bolt 300 is fully inserted into the first and second gears 110, 120. That is, the bolt head 315 abuts the axial end face 118. In this state, the scissor gear is in a second axial position.

The shaft 310 of the installation bolt 300 comprises a alignment section 311 that is arranged for constraining the relative rotation ΔR between the first gear 110 and the second gear 120. The shaft 310 further comprises a recessed section 312 that is recessed with respect to the alignment section 311. For example, the recessed section 312 has a smaller cross section than the alignment section 311. The recessed section 312 may locally have a radial cutout, or may have a smaller diameter than the alignment section 311, as illustrated in FIGs. 4A-B.

The shaft 310 is coupled to the first gear 110 by a threaded connection. For example, the threaded connection is formed by a threaded section 313 of the shaft in combination with a threaded hole 113 in the first gear 110.

The cross section of the threaded section 313 is preferably the same as or larger than the cross section of the alignment section 311, e.g. by having an outer diameter that is equal to or larger than the outer diameter of the alignment section 311. As illustrated, the threaded section 313 extends from the bolt head 315 of the installation bolt, and the recessed section 312 axially extends between the threaded section 313 and the alignment section 311.

The threaded connection allows an operator to axially position the shaft 310 with respect to the first gear 110 and the second gear 120, e.g. in direction Z, by driving the bolt head 315 of the installation bolt. In this way, the installation bolt 300 is drivable to set the scissor gear 100 in the first axial position or in the second axial position.

FIG. 4A shows the scissor gear 100 in the first axial position. The alignment section 311 of the shaft is in contact with the second gear 120, thereby constraining the relative rotation with respect to the first gear 110. The second gear 120 comprises a hole through which the shaft 310 of the installation bolt extends, and the sidewall of the hole provides a contact face for contacting the alignment section 311 of the shaft in the first axial position.

In the first axial position, the alignment section 311 preferably not only constrains the relative rotation, but also aligns the first gear 110 and the second gear 120 with respect to each other in a predefined angular position, such that the teeth 125 of the first gear and the teeth 125 of the second gear are substantially aligned with each other. In this state, the scissor gear can be installed in a gear train, at a desired center distance with respect to a mating gear such that the teeth are in meshing contact. After installation of the scissor gear, the installation bolt 300 can be inserted further into the first and second gear towards the second axial position, by the operator driving the installation bolt.

In the second axial position, illustrated in FIG. 4B, the alignment section 311 is moved away from the second gear 120 and the recessed section 312 of the shaft provides the second gear 120 with a clearance that allows the relative rotation. The scissor bolt 100 further comprises locking means, e.g. in the form of an end stop that is provided by an axial end face 118 of the first gear, that fixates the installation bolt in the second axial position when the bolt head is tightened against the end stop, as illustrated in FIG. 4B.

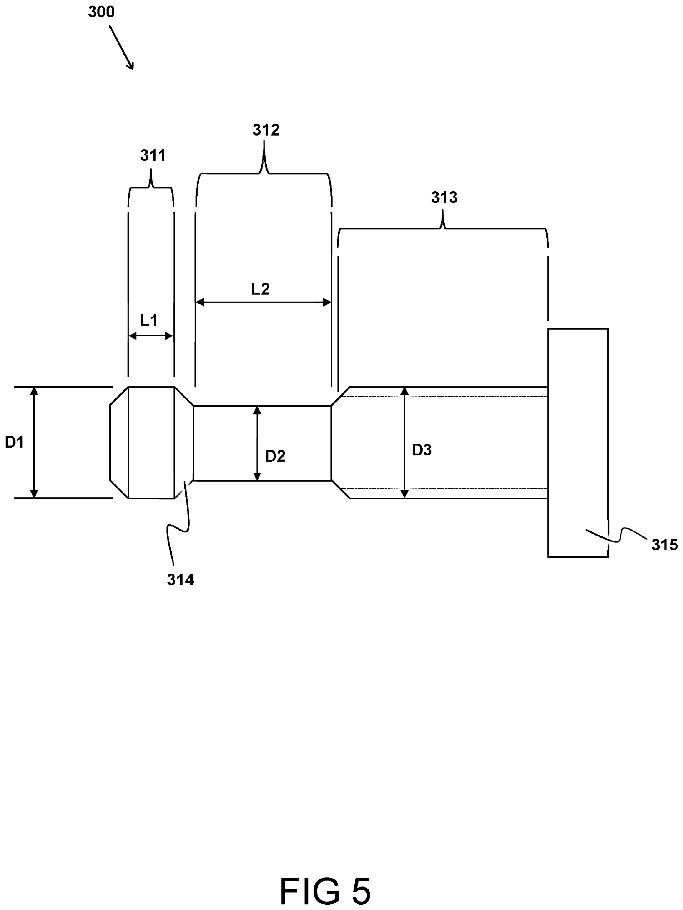

As illustrated in FIG. 5, the alignment section 311 preferably has an outer diameter D1 that is larger than an outer diameter D2 of the recessed section 312, and the alignment section 311 and the recessed section 312 taper into each other, e.g. at tapered section 314, to facilitate the transition from the first axial position to the second axial position, and vice versa. The distal axial end of the shaft 310 may also be tapered, e.g. chamfered, to further facilitate axial positioning of the installation bolt 300 with respect to the first and second gear.

The recessed section 312 preferably has an axial length L2 that is equal to or larger than the axial length of the contact face of the second gear, and to ensure that the clearance is present, the recessed section 312 completely overlaps the contact face in the second axial position. The alignment section 311 preferably has an axial length L1 that is equal to or smaller than the axial length of the contact face, and the alignment section 311 at least partially overlaps the contact face in the first axial position, so that the relative rotation is constrained. The second gear may be locally recessed around the hole, such that axial length of the contact face is reduced with respect to the maximum axial length, or total thickness, of the second gear 120, as long as there is at least some overlap between the alignment section 311 and the contact face.

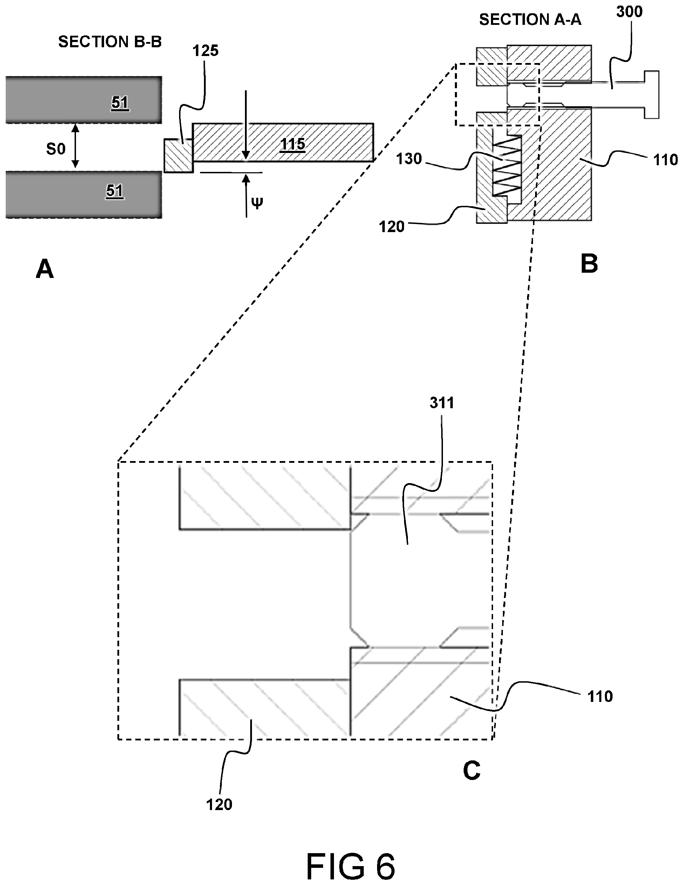

FIGs. 6-9 illustrate various steps of a method for installing the scissor gear 100 into a gear train. In particular, FIGs. 6-9 illustrate the axial position of the installation bolt 300 with respect to the first gear 110 and the second gear 120 during the steps of the method.

FIG. 6A shows the teeth 115, 125 of the scissor gear 100 next to the teeth 51 of a mating gear. The teeth 51 of the mating gear are spaced apart by an interdistance S0. Teeth 115, 125 of the scissor gear 100 are to be installed in meshing contact with the teeth 51 of the mating gear. However, since the first gear 110 and the second gear 120 are preloaded against each other by a spring element 130, the teeth 115, 125 are misaligned by an angular offset Ψ. To align the teeth 115, 125, an operator needs to drive the installation bolt 300 from an initial position, illustrated in FIG. 6B, further into the first and second gears 110, 120, setting the scissor gear in the first axial position. As illustrated in FIG. 6C, the distal end of the shaft 310 of the installation bolt 300 is chamfered, to facilitate insertion of the installation bolt 300 further into the second gear 120.

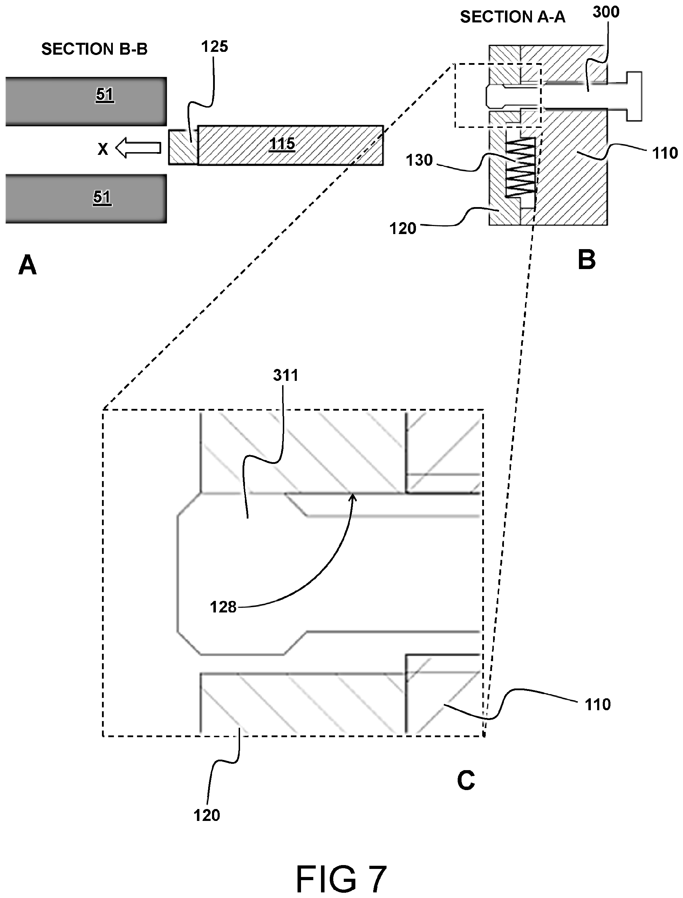

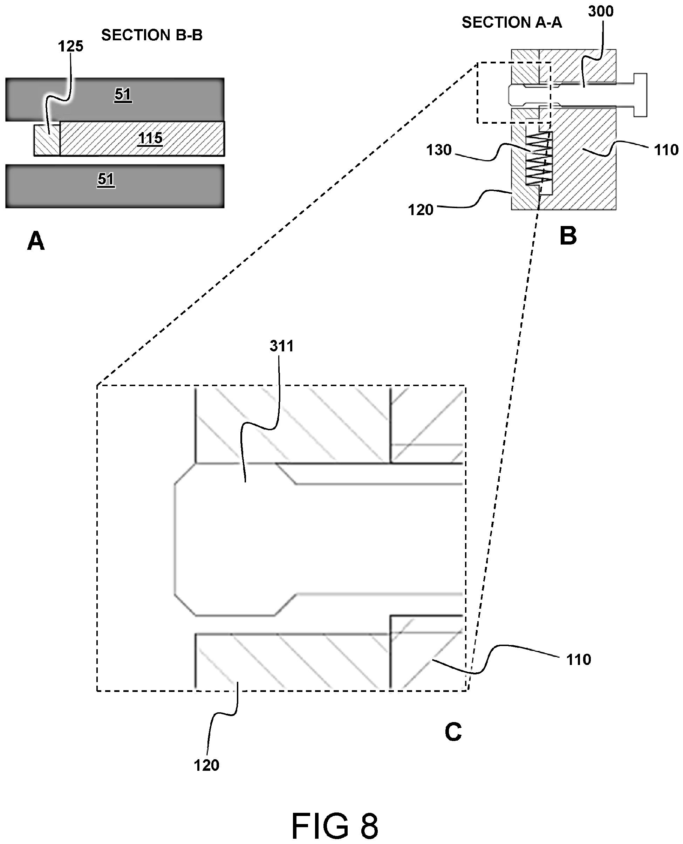

In the first axial position shown in FIG. 7A-C, the alignment section 311 of the shaft is in contact with the second gear 120. In particular, the alignment section 311 extends through a hole in the second gear 120, and is in contact with the sidewall 128 of the hole. The sidewall of the hole thus provides a contact face for contacting the alignment section 311, for thereby constraining the relative rotation with respect to the first gear 110. The alignment section 311 also aligns the teeth 115, 125 of the first and second gears with respect to each other, as shown in FIG. 7A. With the teeth 115, 125 in alignment with each other, the scissor gear can be positioned, e.g. in installation direction X, and mounted into the gear train at the correct center distance from the mating gear, as illustrated in FIG. 8A-C.

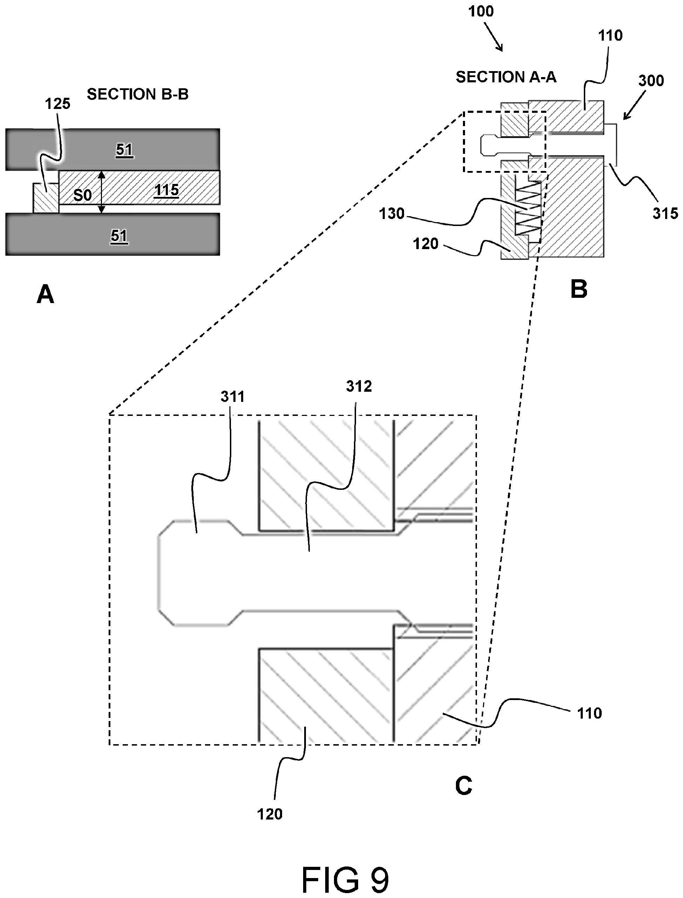

From here, the operator can drive the installation bolt 300 further into the first and second gears 110, 120 as illustrated in FIG. 9A-C. This sets the scissor gear in the second axial position, in which the alignment section 311 is moved away from, e.g. beyond, the second gear 120. This causes the spring element 130 to bias the first and second gear with respect to each other at an angular offset. As a result, the teeth 115, 125 of the scissor gear are both in engagement and push in opposite directions against the mating gear teeth 51.

In the second axial position, the recessed section 312 of the shaft provides the second gear 120 with a clearance that allows the relative rotation, e.g., in case the interdistance S0 between the mating gear teeth 51 varies because of small geometrical deviations or misalignments within applicable tolerance limits. By tightening the bolt head 315 against an axial end face 118 of the first gear, the installation bolt 300 is fixed in the second axial position of the scissor gear. This prevents noise and rattling due to movement of the installation bolt with respect to the first and second gear. The steps of the method can be reversed to disassemble the scissor gear from the gear train.

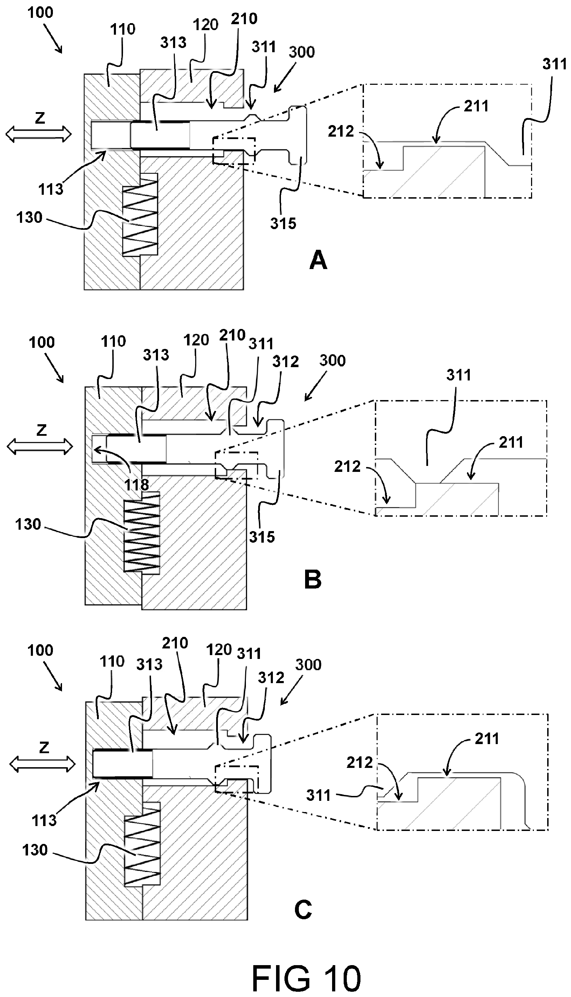

FIGs. 10A-C illustrate another or further variant of the scissor gear 100, in which the recessed section 312 extends from the bolt head 315, the threaded section 313 is provided on a distal axial end of the shaft, and the alignment section 311 extends between the recessed section 312 and the threaded section 313. As illustrated, the second gear 120 comprises a stepped hole 210 through which the shaft of the installation bolt axially extends into a threaded hole 113 in the first gear. This threaded connection allows an operator to axially move the installation bolt 300 in direction Z with respect to the first gear 110 and the second gear 120. The sidewall of the stepped hole 210 in the second gear includes a narrow part 211 that provides the contact surface for contacting the alignment section 311 of the shaft in the first axial position (FIG. 10B), and a wide part 212 that provides the clearance in the second axial position (FIG. 10C). The bottom surface of the threaded hole 113 in the first gear provides the axial end face 118 for fixating the installation bolt 300 in the second axial position.

It will be clear to the skilled person that the invention is not limited to any specific embodiment herein described and that combinations or modifications are possible, in as far as these can be considered within the scope of the appended claims. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean `at least one', and do not exclude a plurality.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such.

## Claims

1. A scissor gear, comprising a first gear and a second gear that are rotatable with respect to each other about a common gear axis, wherein the first gear and the second gear are coupled to each other by a preload arrangement that is configured to apply a preload torque between the first gear and the second gear about the common gear axis, wherein the scissor gear further comprises an installation bolt comprising a shaft that axially extends through the first gear and the second gear;
wherein the shaft comprises an alignment section arranged for aligning the first gear and the second gear with respect to each other in a predefined angular position in which teeth of the first gear and teeth of the second gear are substantially aligned;
wherein the shaft is coupled to the first gear by a threaded connection that allows an operator to axially position the alignment section with respect to the second gear by driving a bolt head of the installation bolt;
wherein, in a first axial position, the alignment section abuts a contact surface of the second gear to hold the second gear with respect to the first gear in the predefined angular position;
wherein in a second axial position, the alignment section is moved beyond the contact surface, and a recessed section of the shaft, which is recessed with respect to the alignment section, provides the second gear with a clearance that allows a relative rotation of the second gear with respect to the first gear; and
wherein, in the second axial position, the bolt head is tightened against an axial end face of the first gear to fixate the installation bolt.

2. The scissor gear according to claim 1, wherein the clearance surrounds the recessed section, thereby allowing a relative rotation between the first gear and the second gear in both a clockwise and an anti-clockwise direction without the recessed section contacting the second gear when the scissor gear is installed and operating in meshing engagement with a mating gear.

3. The scissor gear according to any preceding claim, wherein, in the second axial position, the allowed relative rotation between the first gear and the second gear is smaller than 0,5 degrees, preferably smaller than 0,2 degrees.

4. The scissor gear according to any preceding claim, wherein the second gear comprises a hole through which the shaft of the installation bolt extends, wherein a sidewall of the hole provides the contact surface for contacting the alignment section of the shaft in the first axial position.

5. The scissor gear according to claim 4, wherein the alignment section has an axial length that is equal to or smaller than an axial length of the contact surface, and wherein the alignment section at least partially overlaps the contact surface in the first axial position.

6. The scissor gear according to any of claims 4-5, wherein the recessed section has an axial length that is equal to or larger than an axial length of the contact surface, and wherein the recessed section completely overlaps the contact surface in the second axial position.

7. The scissor gear according to any of claims 4-6, wherein an axial length of the contact surface is smaller than a maximum axial length of the second gear.

8. The scissor gear according to any preceding claim, wherein the alignment section has an outer diameter that is larger than an outer diameter of the recessed section, and wherein the alignment section and the recessed section taper into each other.

9. The scissor gear according to any preceding claim, wherein a distal axial end of the shaft is chamfered.

10. The scissor gear according to any preceding claim, wherein the threaded connection is formed between a threaded section of the shaft and a threaded hole in the first gear.

11. The scissor gear according to claim 10, wherein the threaded section extends from the bolt head and has an outer diameter that is equal to or larger than an outer diameter of the alignment section, and wherein the recessed section axially extends between the threaded section and the alignment section.

12. The scissor gear according to claim 10, wherein the recessed section extends from the bolt head and the threaded section is provided on a distal axial end of the shaft, wherein the alignment section extends between the recessed section and the threaded section, and wherein the second gear comprises a stepped hole through which the shaft of the installation bolt axially extends into a threaded hole in the first gear, wherein a sidewall of the stepped hole includes a narrow part that provides the contact surface for contacting the alignment section of the shaft in the first axial position, and a wide part that provides the clearance in the second axial position, and wherein the threaded hole in the first gear comprises a bottom surface that provides the axial end face for fixating the installation bolt.

13. A truck component, preferably an air compressor or a fuel pump, wherein the truck component comprises the scissor gear according to any preceding claim.

14. A truck, comprising the truck component according to claim 13.

15. A method for installing a scissor gear according to any of the preceding claims in a gear train, the method comprising:
- aligning the first gear and the second gear with respect to each other in the predefined angular position by driving the installation bolt to the first axial position;
- mounting the scissor gear in the gear train in meshing engagement with a mating gear;
- driving the installation bolt to the second axial position, thereby allowing a relative rotation between the first gear and the second gear; and
- tightening the bolt head of the installation bolt against an axial end face of the first gear to fixate the installation bolt in the second axial position.
